# EUROPEAN PATENT APPLICATION

(11) **EP 2 325 938 A1**
(43) Date of publication of application: **25.05.2011**
(21) Application number: 08876978.1
(22) Date of filing: 19.09.2008
(51) Int. Cl.: H01M 10/50, B60L 11/18

(54) **MOBILE OBJECT WITH BUILT-IN SECONDARY BATTERIES AND GAS TREATMENT DEVICE FOR SECONDARY BATTERIES**

(71) Applicant: Mitsubishi Heavy Industries, Ltd., Tokyo 108-8215 (JP)
(72) Inventor: OYA, Takumi, Tokyo 108-8215 (JP); HASHIMOTO, Tsutomu, Tokyo 108-8215 (JP); HASHIZAKI, Katsuo, Nagasaki-shi Nagasaki 850-8610 (JP)
(74) Representative: Bongiovanni, Simone
(86) International application number: PCT/JP2008/067000
(87) International publication number: WO 2010/032312

(57) **Abstract**

A secondary battery mounting vehicle and a gas treatment apparatus of a secondary battery is provided in which even if one of secondary battery modules generates heat, transfer of heat to another secondary battery can be prevented. The secondary battery mounting vehicle includes: a vehicle body having an exhaust vent; a first duct provided in the vehicle body and configured to communicate the exhaust vent and each of spouts when a plurality of secondary battery modules having the spouts from each of which a gas is spouted is mounted; a second duct provided in the vehicle body to communicate with an outside of the vehicle body; and an air flow generating mechanism configured to generate an air flow in the second duct in response to a gas flow in the first duct.

## Description

### Technical Field

The present invention relates to a gas treatment apparatus for a secondary battery and more particularly, to a gas treatment apparatus in a secondary battery mounted vehicle.

### Background Art

A chargeable secondary battery is mounted as a driving source for a vehicle such as an electric vehicle (EV) and a battery-driven forklift. For example, as the secondary battery, a non-aqueous electrolyte type secondary battery such as a lithium secondary battery is used which contains organic solvent as electrolyte. In such a non-aqueous electrolyte-type secondary battery, when the battery temperature rises because of overcharge and pressure crash, the battery deteriorates, and battery inside pressure rises through the evaporation of the organic solvent so that the battery sometimes bursts. Therefore, security countermeasures when the battery temperature rises have been taken in such a secondary battery.

As a technique which prevents the battery deterioration, Japanese Patent Publication (JP-A-Heisei 11-312540) disclosed a non-aqueous electrolyte secondary battery which contains a material for absorbing hydrogen inside the battery. When hydrogen is present inside of the battery, the hydrogen and a positive electrode material react to produce water so that the battery is deteriorated. However, according to this publication, since the battery contains the hydrogen absorbing material, water is not produced and the battery is also not deteriorated.

On the other hand, it is known to provide a relief valve in order to prevent a burst of the battery due to the rise of the battery inside pressure.

Japanese Patent Publication (JP-A-Heisei 7-192775) discloses that a gas absorbing material is interposed between the relief valve and the battery lid in a non-aqueous electrolyte secondary battery which is provided with the relief valve inside the battery lid.

Also, Japanese Patent Publication (JP 2003-68266A) discloses a battery apparatus in which a plurality of secondary batteries with relief valves on a top surface are mounted on a rack. A passage ditch is provided in each of partition members of the rack, and an opening section is provided for each of the partition members of the rack opposite to the relief valve of the secondary battery to communicate with the passage ditch. Also, a sucking section is coupled to the rack to communicate with the passage ditch through an absorption bath which is filled with adsorbent.

### Disclosure of the Invention

In a vehicle, generally, a plurality of secondary battery modules are used to obtain electric power necessary as a driving source. When one of the plurality of secondary battery modules generates heat extraordinarily, the heat has sometimes transferred to other secondary battery modules. As a result, a module arranged around the heat generating secondary battery module receives the heat.

Especially, in the secondary battery mounted on the vehicle, a large-size secondary battery is used for a large capacity to be required. In the large-size secondary battery, the heating value in an extraordinary state becomes large.

Therefore, an object of the present invention to provide a secondary battery mounting vehicle and a gas treatment apparatus of a secondary battery, in which even if one secondary battery module generates heat, the transfer of heat to another secondary battery can be prevented.

A secondary battery mounting vehicle according to the present invention includes: a vehicle body having an exhaust vent; a first duct provided in the vehicle body and configured to communicate the exhaust vent and a spout port when a secondary battery module having the spout port from which a gas is spouted is mounted in the vehicle body; a second duct provided in the vehicle body to communicate with an outside of the vehicle body; and an air flow generating mechanism configured to generate an air flow in the second duct in response to a gas flow in the first duct.

When the secondary battery module generates heat extraordinarily, the internal pressure rises to generate a gas and the gas is spouted from the spout port into the first duct. The air flow generating mechanism generates the air flow in the second duct by a flow of the gas. By using the air flow in the second duct, it is possible to prevent heat from being transferred from the extraordinarily heat generating secondary battery module to another secondary battery module.

The air flow generating mechanism preferably includes: a first impeller arranged in the first duct; a second impeller arranged in the second duct; and a turbine shaft connected as a common rotation axis to both of the first impeller and the second impeller.

Preferably, the secondary battery mounting vehicle further includes: a battery accommodation room in which the secondary battery module is accommodated, and the second duct is arranged to communicate the battery accommodation room and the outside of the vehicle body.

Preferably, the second duct is connected with the battery accommodation room to blow fresh air from a direction parallel to a surface with the largest area in a container of the secondary battery module.

Preferably, from another viewpoint, the first duct is connected to an air intake in addition to the exhaust vent, and a fan is provided in the first duct between the air intake and the exhaust vent, to generate an air flow from the air intake to the exhaust vent.

A secondary battery mounting vehicle according to the present invention includes: a vehicle body having an exhaust vent; a first duct provided in the vehicle body and configured to communicate the exhaust vent and a spout port when a secondary battery module having the spout port from which a gas is spouted is mounted in the vehicle body; and an ejector interposed in the first duct.

It is preferable that the ejector includes a nozzle provided to suck the gas, which is spouted out into the first duct, from an upper stream and jet out to down stream; and a suction room evacuated due to the gas flow jetted out from the nozzle, and the suction room is connected with the battery accommodation room to suck the gas from the battery accommodation room when the suction room is evacuated.

When the secondary battery mounting vehicle further includes: a battery accommodation room provided in the vehicle body and configured to store the secondary battery module, the ejector includes: a nozzle provided to suck the gas, which is spouted out from the exhaust vent, from an upper stream and jet out to down stream; and a suction room evacuated due to the gas flow jetted out from the nozzle. The suction room is connected with the battery accommodation room to suck the gas from the battery accommodation room when the suction room is evacuated.

A gas treatment apparatus of a secondary battery, includes: a first duct provided in the vehicle body and configured to communicate outside and a spout port when a secondary battery module having the spout port from which a gas is spouted is mounted; a second duct provided in the vehicle body to communicate with an outside; and an air flow generating mechanism configured to generate an air flow in the second duct in response to a gas flow in the first duct.

The secondary battery mounting vehicle and the gas treatment apparatus of a secondary battery are provided in which even if one secondary battery module generates heat, the transfer of heat to another secondary battery can be prevented.

### Brief Description of the Drawings

FIG. 1 is a diagram schematically showing a secondary battery mounting vehicle according to a first embodiment of the present invention;
FIG. 2 is a diagram showing a modification of the first embodiment;
FIG. 3 is a diagram schematically showing the secondary battery mounting vehicle according to a second embodiment of the present invention;
FIG. 4 is a diagram schematically showing the secondary battery mounting vehicle according to a third embodiment of the present invention;
FIG. 5 is a diagram schematically showing the secondary battery mounting vehicle according to a fourth embodiment of the present invention; and
FIG. 6 is a diagram schematically showing the secondary battery mounting vehicle according to a fifth embodiment of the present invention.

### Best Mode for Carrying Out the Invention

### First Embodiment

Hereinafter, a gas treatment apparatus of a secondary battery mounting vehicle according to a first embodiment of the present invention will be described with reference to the attached drawings.

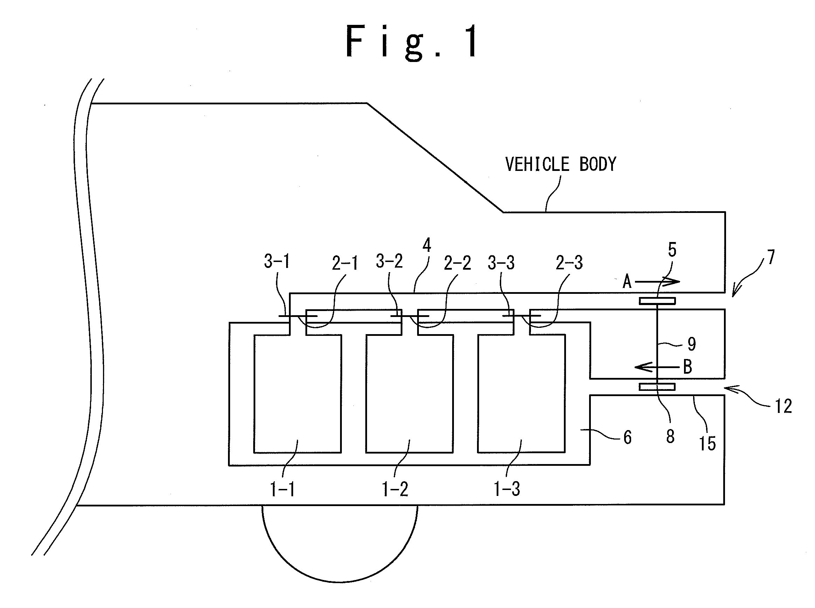

FIG. 1 is a block diagram schematically showing the secondary battery mounting vehicle in the present embodiment. The secondary battery mounting vehicle is provided with a vehicle body, and the vehicle body is provided with a battery accommodation room 6, a first duct 4, a second duct 15, a first impeller 5, a second impeller 8 and a turbine shaft 9. Also, a first exhaust vent 7 and an opening 12 are provided for the vehicle body. A plurality of secondary battery modules 1-1 to 1-3 are accommodated in the battery accommodation room 6.

The plurality of secondary battery modules 1-1 to 1-3 are mounted as a power source to drive the secondary battery mounting vehicle. In each of the plurality of secondary battery modules, a secondary battery is accommodated in a container. For example, as the secondary battery, a lithium secondary battery is used which contains lithium ions in electrolyte, and uses organic solvent as electrolyte. A spout 2 with the relief valves 3 attached is provided for each secondary battery module 1. The secondary battery sometimes generates heat in case of pressure crash in an accident and overcharge of the battery. At this time, a gas is generated sometimes by the evaporation and chemical change of the organic solvent which is electrolyte. When the gas is accumulated in each secondary battery module 1, there is a case that the container bursts due to the battery inside pressure. The relief valve 3 is provided to prevent the burst of the container and to make gas spout from a specific direction. The relief valve 3 is opened when the pressure of the gas accumulated in the container becomes higher than a preset value. When the pressure in the container is in a normal state, the relief valve 3 is closed to seal the secondary battery module 1. On the other hand, when the pressure in the secondary battery module 1 exceeds an operation start pressure of the relief valve 3, the relief valve 3 is opened so that the gas is spouted out through the spout 2.

The first duct 4 is provided to lead the gas spouted out from each secondary battery module 1 outside in emergency. The first duct 4 is provided to communicate the spout 2 of each secondary battery module 1 and the first exhaust vent 7. The pressure and flow rate of the gas spouted out from the spout 2 in the emergency are determined based on the specifications of the relief valve 3, but generally, the pressure is high and the flow rate is also high. It is not desirable that the gas of such a highpressure and a high flow rate is exhausted to the outside of the vehicle just as it is. It is desirable that the first duct 4 is designed for the pressure of gas to be sufficiently reduced. Specifically, it is desirable that the caliber of the first duct 4 is designed in consideration of the caliber of the spout 2 and the specification of relief valve 3.

The second duct 15 is provided to communicate the opening 12 and the battery accommodation room 6. The second duct 15 is provided to send external air into the battery accommodation room 6 in emergency and to cool the plurality of secondary battery modules 1.

The first impeller 5 is provided in the first duct 4. The first impeller 5 is arranged on the side of downstream from the spout 2 of each secondary battery module 1. The first impeller 5 is connected with the turbine shaft 9. The first impeller 5 rotates around the turbine shaft 9 as a rotation axis by the gas flow in the first duct 4.

The second impeller 8 is provided in the second duct 15. The second impeller 8 is connected with the turbine shaft 9 and rotates around the turbine shaft 9 as the rotation axis. That is, the turbine shaft 9 is a common rotation axis to the first impeller 5 and the second impeller 9. The second impeller 8 is coupled to the turbine shaft 9 such that an air flow (arrow B in FIG. 1) into the battery accommodation room 6 is generated in the second duct 15 when the first impeller 5 rotates with the gas flow (arrow A in FIG. 1) into the exhaust vent 7 in the first duct 4.

Next, an operation of the secondary battery mounting vehicle of the present embodiment in an emergency will be described.

It is assumed that one of the plurality of secondary battery modules 1 generates heat extraordinarily because of over-charge/over-discharge of the secondary battery, crash at an accident, and so on. In the extraordinarily heat generating secondary battery module 1, a gas generates inside and then the inside pressure rises. When the inside pressure exceeds the operation start pressure of the relief valve 3, the relief valve 3 is opened. As a result, the gas spouts out from the spout 2 of the heat generating secondary battery module 1 into the first duct 4. In the first duct 4, the gas flows toward the exhaust vent 7. The first impeller 5 rotates with this gas flow. In this case, the pressure and flow rate of the gas are reduced by a pressure loss, and the gas in the first duct 4 is exhausted from the exhaust vent 7 in a gentle condition.

On the other hand, with the rotation of the first impeller 5, the second impeller 8 rotates through the turbine shaft 9. The external air flows through the second duct 15 from the opening 12 into the battery accommodation room 6 by the rotation of the second impeller 8. The external air flowing into the battery accommodation room 6 is blown to the plurality of secondary battery modules 1. The plurality of secondary battery modules 1 are cooled with the external air.

In this way, it can be prevented that the heat is transferred from the heat generating secondary battery module 1 to another secondary battery module and the whole of secondary battery modules 1 generate heat and take fire. Using the flow of spouted gas, the plurality of secondary battery modules 1 can be cooled automatically.

It should be noted that in the present embodiment, a case that the gas flowing through the first duct 4 toward the exhaust vent 7 generates the air flow through the second duct 15 toward the battery accommodation room 6 has been described. However, the second impeller 8 may be arranged such that the air flow from the battery accommodation room 6 toward the opening 12 is generated. In this case, the pressure of the battery accommodation room 6 is reduced so that a heat transfer rate becomes low. As a result, it is possible to prevent the heat from transferring from the heat generating secondary battery module 1 to other secondary battery modules.

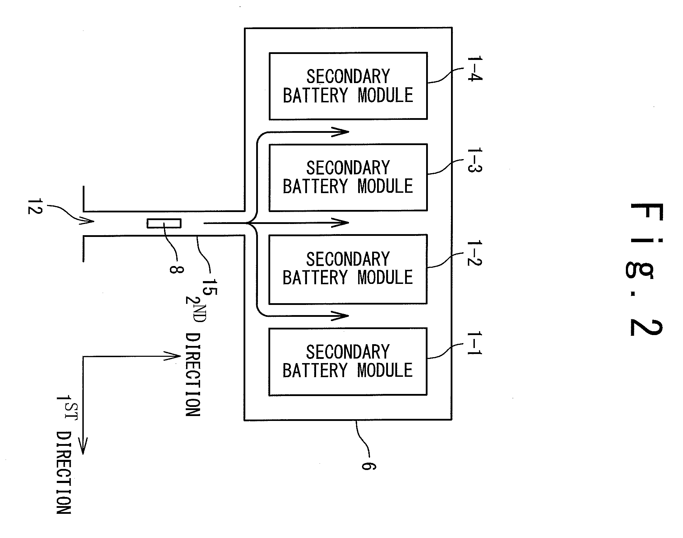

In the present embodiment, the connection between the second duct 15 and the battery accommodation room 6 may be modified. A modification of the connection between the second duct 15 and the battery accommodation room 6 will be described with reference to FIG. 2. FIG. 2 shows a layout of the plurality of secondary battery modules 1 in the battery accommodation room 6, and a connection position of the second duct 15 and the battery accommodation room 6. The plurality of secondary battery modules are supposed to be arranged along a first direction in the battery accommodation room 6, as shown in FIG. 2. In each of the plurality of secondary battery modules, a surface of the battery container which has the largest area is supposed to extend into a direction (a second direction) orthogonal to the first direction. The second duct 15 is connected with the battery accommodation room 6 to blow the external air from the second direction.

By such a configuration, the external air sent into the battery accommodation room 6 in emergency becomes easy to flow through a space between secondary battery modules 1. As a result, the heat transfer rate can be lowered between adjacent secondary battery modules 1. Therefore, it is possible to surely prevent that the heat of extraordinarily heat generating secondary battery module 1 is transferred to another secondary battery module 1.

### Second Embodiment

Next, a second embodiment of the present invention will be described.

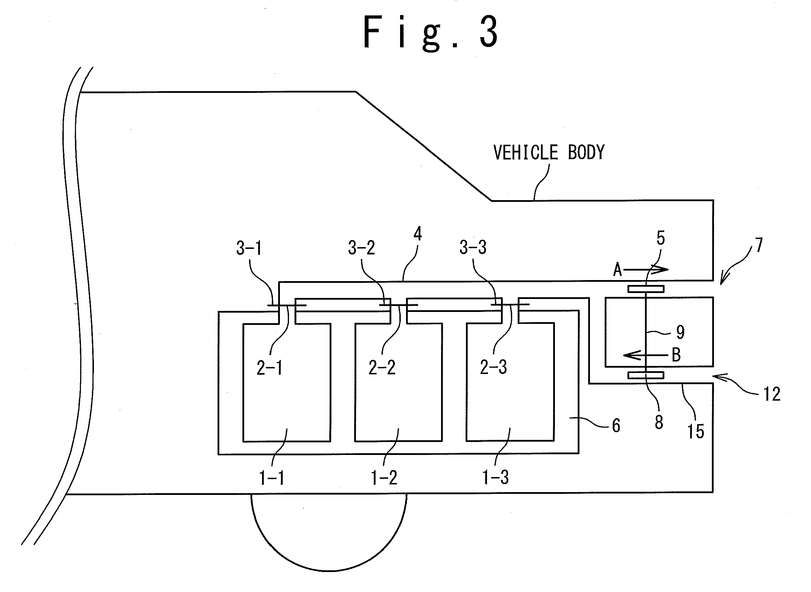

FIG. 3 is a diagram schematically showing the secondary battery mounting vehicle of the present embodiment. In the present embodiment, the route of the second duct 15 is changed from that in the first embodiment. Because the second embodiment is same as the first embodiment in other points, the detailed description thereof is omitted.

As shown in FIG. 3, the second duct 15 is provided between the opening 12 and the first duct 4. It should be noted that in FIG. 3, although the second duct 15 is connected with the first duct 4 on the upstream side of the first impeller 5, it may be connected with the first duct on the side of the downstream of the first impeller 5.

In the present embodiment, when the gas spouts into the first duct 4 in emergency, an air flow generates in the second duct 15, like the first embodiment. However, the air flow generated in the second duct 15 is introduced into not the battery accommodation room 6 but the first duct 4. By introducing the external air into the first duct 4, the gas in the first duct 4 is diluted. In case of the lithium secondary battery, the gas which is spouted out from the secondary battery module 2 in emergency would contain components of carbon dioxide, carbon monoxide, methane, propane, hydrocarbon, ethyl methyl carbonate, and a particle matter (PM) component of carbon black. Such components are diluted with the external air introduced through the second duct 15. Therefore, the diluted gas is exhausted from the exhaust vent 7, and an influence on the environment in the periphery is prevented.

### Third Embodiment

Next, a third embodiment of the present invention will be described.

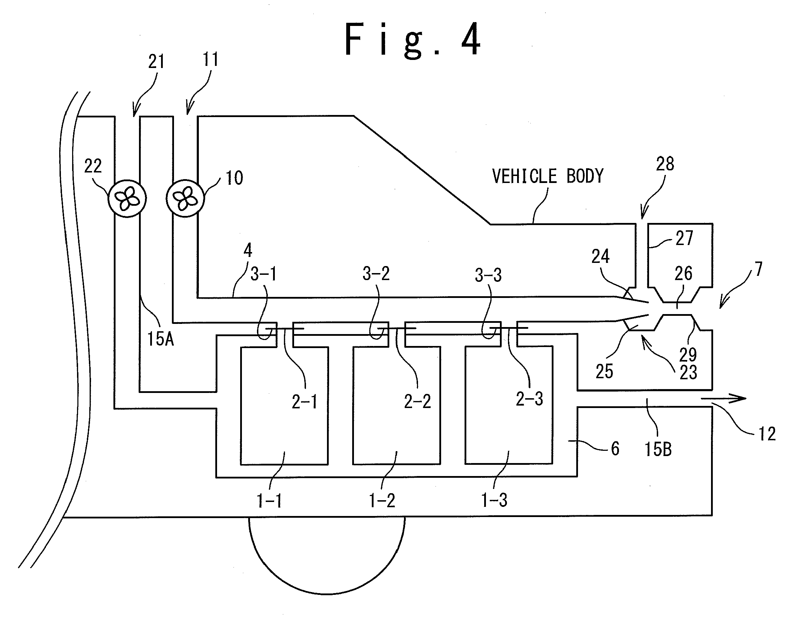

FIG. 4 is a diagram schematically showing the configuration of the secondary battery mounting vehicle of the present embodiment. As shown in FIG. 4, an ejector 23 is added, as compared with the configuration of the first embodiment. Also, air intakes 11 and 21, fans 10 and 22, and the second duct 15A are added to the vehicle body. Also, unlike the second embodiment, an impeller and a turbine shaft are not provided. The first duct 4 is connected with the air intake 11 through the fan 10. The second duct 15A communicates the air intake 21 and the battery accommodation room 6. The fan 22 is interposed on the way of the second duct 15A and introduces the external air from the air intake 21 into the battery accommodation room 6. Because the configuration of the present embodiment is same as that of the second embodiment in other points, the description thereof is omitted.

The ejector 23 is interposed in the first duct 4 on the downstream side from the spouts 3 of the secondary battery modules 1. The ejector 23 is provided with a nozzle 24 (a pressure reducing section), a suction room 25 (a sucking section), a mixing section 26 and a diffuser 29 (a pressure increasing section).

In the nozzle 24, the suction side is directed to the upstream side and the spout side is directed to the downstream side. The tip of nozzle 24 is arranged in the suction room 25. When the gas is spouted out into the first duct 4, the gas is jetted out in the suction room 25 through the nozzle 24. The suction room 25 is coupled to the mixing section 26 on the side opposite to the nozzle 24. The mixing section 26 is coupled to the diffuser 29 with a larger diameter than that of the mixing section 26 on the downstream side. The downstream side of the diffuser 29 is coupled with an exhaust vent 7. Also, the suction room 25 is coupled to a third duct 27 separate from the mixing section 26. The third duct 27 is coupled with an intake 28 provided for the vehicle body. The suction room 25 is configured to suck external air from the intake 28 by the entrainment effect of the gas flow jetted out from the nozzle 24.

Next, an operation of the secondary battery mounting vehicle in the present embodiment in emergency will be described.

It is supposed that one secondary battery module 1 generates a gas due to the generation of heat in emergency and the battery inside pressure exceeds the operation start pressure of the relief valve 3. Then, the relief valve 3 is opened and the gas is spouted out in the first duct 4 through the spout 2. The gas spouted out in the first duct 4 is jetted out into the suction room 25 from the nozzle 24. Although depending on the specification of the relief valve 3, the gas spouted out in the first duct 4 is in a high pressure, generally. Since the gas in the high pressure is jetted out from the nozzle 24, the pressure of the suction room 25 is reduced. The external air is sucked in the suction room 25 through the third duct 27 and the intake 28 by the entrainment effect. The gas jetted out from the nozzle 24 and the sucked external air is mixed in the mixing section 26. As a result, the gas is diluted with the external air. Also, the gas is cooled by the external air. The diluted and cooled gas is exhausted from the exhaust vent 7 through the diffuser 29.

Also, in the first duct 4, the external air is taken in from the air intake 11 by a fan 10. Thus, the gas in the first duct 4 is further diluted and cooled.

In this way, according to the present embodiment, since two or more of the nozzle 24 (pressure reducing section), the suction room 25 (sucking section), the mixing section 26 and the diffuser 29 (pressure increasing section) between the exhaust vent and the spout 2, the gas diluted and cooled with external air, i.e. harmless gas is exhausted from the exhaust vent 7. Thus, an influence on the environment of the periphery is prevented.

Moreover, when fine particles exist in the gas spouted out in the first duct 4, the fine particles are made further fine when being jetted out from the nozzle 24. By the further conversion of the particles into finer particles, the surface area of finer particles becomes larger. As a result, the cooling of gas with the external air is effectively carried out.

Also, even if a combustible component is contained in the gas, it is possible to prevent the gas from catching fire, since a high speed gas flow is generated in the suction room 25 to reduce the pressure. Also, the gas catching fire can be prevented from the viewpoint of cooling. Also, the gas catching fire can be prevented from the viewpoint of dilution.

Also, according to the present embodiment, cooling and dilution are carried out by using the gas being in a high pressure. Therefore, the conversion into the harmless gas can be carried out by using the gas itself as a driving source. That is, it is not necessary to provide the driving source for the conversion into the harmless gas separately.

It should be noted that in the present embodiment, a case where the fan 10 and the air intake 11 are provided has been described. However, it is not always necessary to provide the fan 11 and the air intake 11.

### Fourth Embodiment

Next, a fourth embodiment of the present invention will be described.

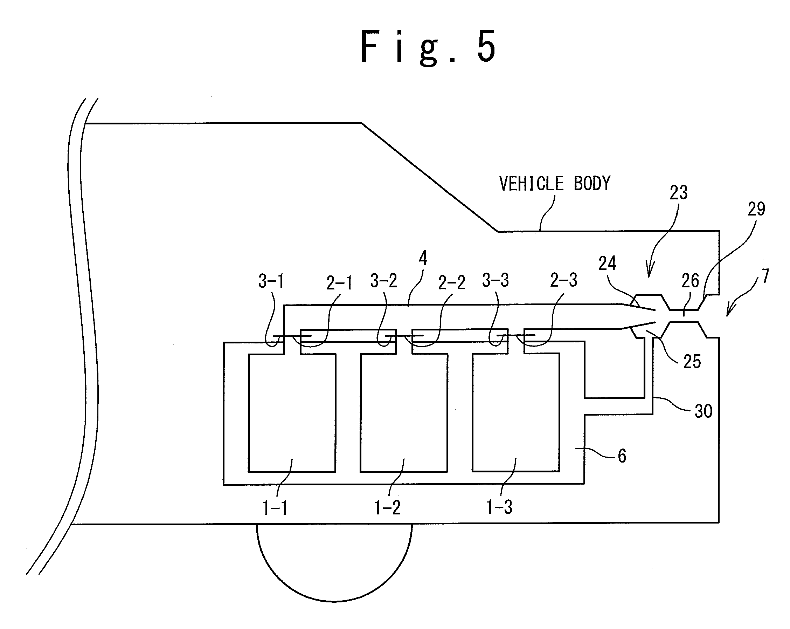

FIG. 5 is a diagram schematically showing the configuration of the secondary battery mounting vehicle in the present embodiment. As shown in FIG. 5, the ejector 23 is provided, like the third embodiment. However, different from the third embodiment, the suction room 25 of the ejector 23 communicates with the battery accommodation room 6 through a fourth duct 30. Also, the battery accommodation room 6 is closed and the second duct is not provided. Also, the fan 11 and the air intake 11 are not provided. Because other points may be same as those of the third embodiment, the description thereof is omitted.

An operation of the present embodiment in emergency will be described. It is supposed that one of the plurality of secondary battery modules 1 generates heat. Also, it is supposed that the gas is generated in the heat generating secondary battery module 1 and the inside pressure exceeds the operation start pressure of the relief valve 3. As a result, the gas is spouted from the heat generating secondary battery module 1 into the first duct 4. The gas in the first duct 4 is directed from the nozzle 24 to the suction room 25. At this time, like the third embodiment, the inside of suction room 25 is reduced in pressure. The gas is sucked into the pressure-reduced suction room 25 from the battery accommodation room 6 through the fourth duct 30. By this, the operation similar to the third embodiment is attained.

Here, in the present embodiment, the battery accommodation room 6 is reduced in pressure by being sucked into the suction room 25. As a result, the heat transfer rate in the battery accommodation room 6 decreases. For this reason, it is possible to prevent that the heat of the secondary battery module 1 is transferred to another secondary battery module 1. If the heat transfer cannot be prevented, all of the plurality of secondary battery modules 1 would become an extraordinary state. On the other hand, according to the present embodiment, since the heat transfer rate in the battery accommodation room 6 can be decreased, it is possible to prevent that all of the plurality of secondary battery modules 1 become the extraordinary state because of one heat generating secondary battery module 1.

### Fifth Embodiment

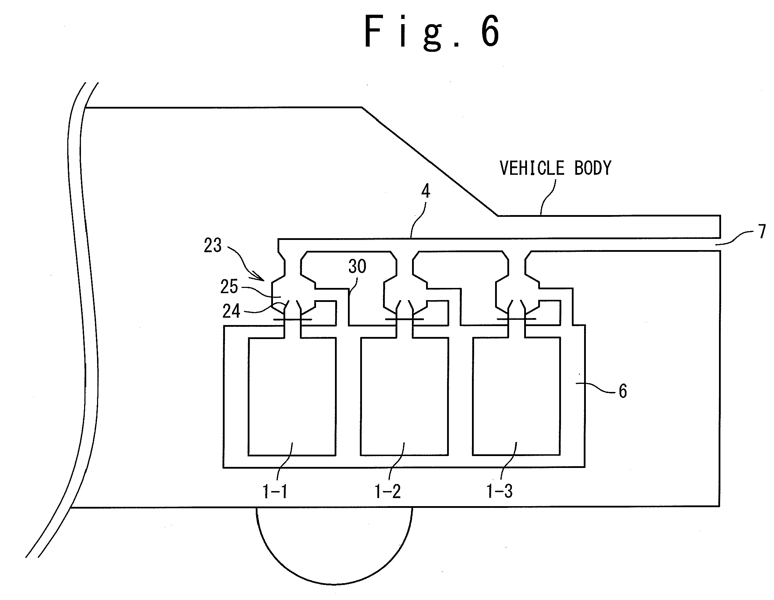

Next, a fifth embodiment of the present invention will be described. FIG. 6 is a block diagram schematically showing the secondary battery mounting vehicle according to the fifth embodiment.

In the fourth embodiment, one ejector 23 is provided for the plurality of secondary battery modules 1. On the other hand, in the present embodiment, one ejector 23 is provided for each of the secondary battery modules 1. Specifically, the ejector 23 is provided between the first duct 4 and each secondary battery module 1. The fourth duct 30 of each ejector 23 is connected with the closed battery accommodation room 6.

In the present embodiment, the gas spouted out from each secondary battery module 1 is converted into a harmless gas by the ejector 23 and then is introduced into the first duct 4. Then, the gas is exhausted through the fourth duct 4 from the exhaust vent 7.

Even if the configuration in the present embodiment is adopted, the same effect as in the fourth embodiment can be attained. Also, the present embodiment is a modification of the fourth embodiment, but one ejector can be provided for each secondary battery module 1 in the third embodiment, like the present embodiment.

As described above, the first to fifth embodiments of the present invention have been described. Here, these embodiments can be appropriately combined in a range where there is not contradiction.

## Claims

1. A secondary battery mounting vehicle comprising:
a vehicle body having an exhaust vent;
a first duct provided in said vehicle body to communicate said exhaust vent and a spout when a secondary battery module having said spout from which a gas is spouted is mounted in said vehicle body;
a second duct provided in said vehicle body to communicate with an outside of said vehicle body; and
an air flow generating mechanism configured to generate an air flow in said second duct in response to a gas flow in said first duct.

2. The secondary battery mounting vehicle according to claim 1, wherein said air flow generating mechanism comprises:
a first impeller arranged in said first duct;
a second impeller arranged in said second duct; and
a turbine shaft connected as a common rotation axis to both of said first impeller and said second impeller.

3. The secondary battery mounting vehicle according to claim 1 or 2, further comprising:
a battery accommodation room in which said secondary battery module is accommodated,
wherein said second duct is arranged to communicate said battery accommodation room and the outside of said vehicle body.

4. The secondary battery mounting vehicle according to claim 3, wherein said second duct is connected with said battery accommodation room to blow external air from a direction parallel to a surface with the largest area of a container of said secondary battery module.

5. The secondary battery mounting vehicle according to any of claims 1 to 4, wherein said first duct is connected to an air intake in addition to said exhaust vent, and
wherein a fan is provided in said first duct between said air intake and said exhaust vent, to generate an air flow from said air intake to said exhaust vent.

6. A secondary battery mounting vehicle comprising:
a vehicle body having an exhaust vent;
a first duct provided in said vehicle body to communicate said exhaust vent and a spout when a secondary battery module having said spout from which a gas is spouted is mounted in said vehicle body; and
two or more of a suction section, a pressure decreasing section, a mixing section and a pressure increasing section provided between said exhaust vent and said spout.

7. The secondary battery mounting vehicle according to claim 6, wherein a mechanism provided between said exhaust vent and said spout is an ejector.

8. The secondary battery mounting vehicle according to claim 7, further comprising:
a battery accommodation room provided in said vehicle body and configured to store said secondary battery module,
wherein said ejector comprises:
a nozzle provided to suck the gas, which is spouted out from said exhaust vent, from an upstream side and jet out to a downstream side; and
a suction room reduced in pressure due to the gas flow jetted out from said nozzle,
wherein said suction room is connected with said battery accommodation room to suck the gas from said battery accommodation room when said suction room is reduced in pressure.

9. A gas treatment apparatus of a secondary battery, comprising:
a first duct provided to communicate outside and a spout when a secondary battery module having said spout from which a gas is spouted is mounted;
a second duct provided to communicate with an outside; and
an air flow generating mechanism configured to generate an air flow in said second duct in response to a gas flow in said first duct.
